# EUROPÄISCHE PATENTSCHRIFT

(11) **EP 0 983 523 B1**
(45) Veröffentlichungstag und Bekanntmachung des Hinweises auf die Patenterteilung: **12.11.2003**
(21) Anmeldenummer: 98924298.7
(22) Anmeldetag: 11.05.1998
(51) Int. Cl.: G01T 3/08

(54) **VERFAHREN ZUR ERMITTLUNG VON NEUTRONENSPEKTREN, UND VORRICHTUNG ZUR DURCHFÜHRUNG DES VERFAHRENS**
METHOD FOR DETERMINING NEUTRON SPECTRA AND DEVICE FOR CARRYING OUT SAID METHOD
PROCEDE ET DISPOSITIF POUR LA DETERMINATION DE SPECTRES NEUTRONIQUES

(30) Priorität: 23.05.1997 DE 19721618
(43) Veröffentlichungstag der Anmeldung: 08.03.2000
(73) Patentinhaber: GSF - Forschungszentrum für Umwelt und Gesundheit GmbH, 85764 Oberschleissheim (DE)
(72) Erfinder: FEHRENBACH, Georg, D-80809 München (DE); CORDES, Eric, D-80687 München (DE); SPRUNCK, Markus, D-85570 Markt Schwaben (DE); WAHL, Wolfgang, D-83727 Schliersee (DE)
(86) Internationale Anmeldenummer: EP9802732
(87) Internationale Veröffentlichungsnummer: WO98053342

(56) Entgegenhaltungen:
- WO-A-95/30909
- GB-A- 1 014 682
- US-A- 4 383 179
- US-A- 5 142 153
- US-A- 5 572 028

## Beschreibung

Die Erfindung betrifft ein Verfahren zur Ermittlung von Neutronenspektren, nach dem Oberbegriff des Patentanspruchs 1, wie er aus J. Barthe et. A1, Radiation Protection Dosimetry Vol. 70. Nos. 1- 4, 59- 66 (1997) Nuclear Technology Publishing bekannt ist und eine Vorrichtung zur Durchführung des Verfahrens.

In der Dosimetrie für Neutronenstrahlung werden zur Zeit hauptsächlich passive Detektionssysteme eingesetzt, deren Dosisanzeigen nur für begrenzte Energiebereiche der Neutronenstrahlung hinreichend genau sind (z.B. Albedo- oder Plastikspurdetektoren) . Darüber hinaus werden diese Systeme in der Regel nur einmal pro Monat ausgewertet, so daß in manchen Fällen eine erhöhte Strahlenexposition erst nach Monaten festgestellt wird. Ein großer Fortschritt in der Personendosimetrie für Neutronenstrahlung bestünde in der Einführung von Echtzeitdosimetern mit einer Dosisanzeige für einen Energiebereich der Neutronen vom thermischen Bereich (meV) bis ca. 20 MeV ohne die Verwendung von arbeitsplatzspezifischen Kalibrier- oder Korrekturfaktoren. Die meisten Neutronfelder, die in der Praxis vorkommen (Kernkraftwerke, Verarbeitung und Transport von nuklearen Brennstoffen, Neutronentherapie, etc.), haben Neutronenenergien im genannten Energiebereich.

Personendosimeter werden z. Z. hauptsächlich im Bereich der Photonendetektion eingesetzt. Beispiele für elektronische Personendosimeter für Photonenstrahlung sind: Das von Siemens-Plessy entwickelte Personendosimeter (EPD1, siehe z. B. Electronic dosimetry 1/93 Issue 1, Siemens Plessey Controls Ltd, 1993) für die Anzeige der neuen Meßgröße Hₚ(10) für Photonenstrahlung und zum Nachweis und zur Dosimetrie von Photonen- und Elektronenstrahlung geringer Reichweite (Hautdosis) oder die wie das Siemens-Dosimeter auf Si-Dioden basierenden Dosimeter der Firma Rados (RAD-50, RAD-52 Digitale Taschendosimeter, Datenblätter der Firma Rados RADOS Technology Oy, Finnland).

Aktive Neutronenpersonendosimeter basierend auf Silizium gibt es z. Z. nur wenige. Als Beispiele können die Neutronendosimeter der japanischen Firma Aloka genannt werden (Barthe, Bordy, Lahaye; Electronic Neutron Dosemeters: History and State of the Art, Radiation Protection Dosimetry Vol. ∼70, Nos. 1-4, 59-66 (1997)). Sie sind ausgelegt für die Detektion von thermischen und schnellen Neutronen (Modell PDM-303, siehe Datenblatt ALOKA CO. LTD. Tokyo, Japan) oder ausschließlich für thermische Neutronen (Modell PDM-307, siehe Datenblatt). Die auf Zählrohren basierende Systeme der Firma Stephen sind geeignet Photonenstrahlung zu detektieren und eine Dosisbewertung vorzunehmen (Datenblatt Stephen, Centronic D.C.A. Mini Instruments T.G.M.; Surrey, England).

Neutrondetektionssyteme zur Ermittlung von Informationen über die Energieverteilung von Neutronstrahlung, die den strahlenschutzrelevanten Energiebereich von 10 meV bis ca. 10 MeV abdecken, sind bisher nur in Form der 'Bonner Kugeln' vorhanden, die auf der unterschiedlichen Absorption der Neutronen pro Detektionseinheit beruhen (Bramblett, Ewing, Bonner; A New type of Neutron Spectrometer; Nuclear Instruments and Methods 9, 1-12 (1960)). In einem Auswertungsverfahren wird dann von einem erfahrenen Experten die sogenannte Entfaltung durchgeführt um das Neutronenspektrum zu bestimmen.

Alle genannten Systeme sind derart konstruiert, daß sie als Ereigniszähler ausgelegt sind, ohne eine Strahlenfeldanalyse mit der Möglichkeit einer Spektrumsbestimmung vorzunehmen. Däs Aloka-Dosimeter (PDM-303) wurde Tests unterzogen, um deren Genauigkeit der Dosisanzeige als Funktion der Neutronenenergie zu untersuchen (z.B. CERN Report TIS- RP/TM/92- 90/rev (1992)). Ein Resultat der Tests gibt eine starke Abweichung der Dosisanzeige für schnelle Neutronen im Vergleich zur tatsächlichen Dosis wieder.

Von diesen Systemen ist kein einziges dazu geeignet das Spektrum der Neutronen wiederzugeben.

Das einzige derzeit vorhandene System zur Neutronenspektrometrie im gesamten Energiebereich von thermisch bis schnell - die Methode der Bonner-Kugeln - ist vom Standpunkt der Verfahrensweise sehr aufwendig, da die Detektionseinheiten sehr groß und aufwendig im Transport sind und die Auswertungen nur von einem ausgebildeten Experten unter Verwendung von Annahmen und Informationen über die gemessenen Spektren durchgeführt werden können. Aus US 5 572 028 A ist ein Detektorsystem mit Thermoluminiszenzdetektoren bekannt, bei dem mit Hilfe von künstlichen neuronalen Netzen aus den Detektorsignalen Dosisgrößen oder Energien bestimmt werden. Dies geschieht jeweils in einem Schritt. Die Ansprechfunktionen der einzelnen Detektoren werden dabei lediglich durch die Verwendung von unterschiedlichen Filtern beeinflußt.

Des weiteren ist aus GB 1 014 682 ein Verfahren zur Bestimmung von Neutronenspektren bekannt, bei dem das Energiespektrum aus den Spektren von mehreren Schwellwertdetektoren mit Hilfe eines einfachen Entfaltungsprozesses ermittelt wird. Dieses Verfahren ist dabei wegen der Art der Schwellwertdetektoren auf den Energiebereichvon 0,4 bis max. 3 MeV beschränkt.

Aufgabe der Erfindung ist es, sowohl ein Verfahren der e. g. Art so auszugestalten, daß die Neutronenspektren in Echtzeit ermittelt werden können als auch eine Vorrichtung zur Durchführung des Verfahrens zur Verfügung zu stellen.

Gelöst wird diese Aufgabe durch die Merkmale der Patentansprüche 1 und 9. Die abhängigen Ansprüche beschreiben vorteilhafte Ausgestaltungen der Erfindung.

Die Erfindung stellt ein neues Verfahren dar, mit welchem die Dosisbestimmung für Neutronenstrahlung basierend auf Konverter-Halbleiter-Detektoren, die eine sofortige Auswertung ermöglichen (Echtzeitdosimeter), durchgeführt werden kann. Das Dosimeter besteht aus einem Multi-Element-System zur Signalaufnahme und einem dazugehörenden Auswertealgorithmus, basierend auf der Methode der künstlichen neuronalen Netze, wobei keine Vorabinformation über die spektrale Energieverteilung der Neutronenstrahlung vorhanden sein muß.

Im Gegensatz zu bisherigen Meßsystemen wird hier die Bestimmung der Energieverteilung der Neutronenstrahlung in einem ersten Schritt angestrebt, in einem zweiten Schritt erfolgt die Berechnung der Meßgröße. Dies hat den Vorteil, daß durch Anwendung entsprechender Dosiskonversionsfaktoren verschiedene - im Fall erhöhter Expositionen wichtige zur Meßgröße ergänzende - Dosis größen wie z. B. Körper- und Organdosen ausgegeben werden können.

Zu einem Strahlungssensor gehört ein mit einem Konverter belegter Halbleiter. Als Element kann ein solcher Strahlungssensor angesehen werden bzw. falls die Registrierung der Teilchen über aufgenommene Pulshöhenverteilungen erfolgt, so kann als Element auch die in einem Sensor erfolgte Energiedeponierung in einem speziellen Energiebereich angesehen werden. In dem Verfahren ist das einfallende Neutronenspektrum korreliert mit den Verhältnissen der registrierten Zählereignisse der einzelnen Elemente, da jedes Element eine eigene Energieabhängigkeit der registrierten Zählereignisse von der einfallenden Neutronenstrahlung aufweist. Der Auswertealgorithmus gibt im ersten Schritt das Neutronenspektrum mit einer geeigneten Energieauflösung an und in weiteren Schritten werden durch Anwendung von Dosiskonversionsfaktoren, die in Form von Tabellen in der Auswertesoftware vorhanden sind und deshalb leicht angepaßt werden können, Dosismeßgrößen bestimmt (z. 3. die Personendosis Hₚ(10), effektive Dosis).

Das hier vorgestellte Verfahren stellt eine Vereinfachung des Meß- und Auswertevorgangs dar, indem eine sofortige Entfaltung nach einer gewissen Zählperiode durchgeführt werden kann. Aufgrund der ermittelten Informationen über die Energie des Neutronenstrahlungsfeldes können verschiedene Dosismeßgrößen ermittelt werden im Vergleich zu herkömmlichen Systemen, die die Angabe nur einer Meßgröße erlauben. Darüber hinaus ist eine eventuelle Einführung von neuen Meßgrößen durch eine Anpassung der Aüswertesortware einfach möglich. Die zur Zeit verwendeten Detektionssysteme müßten bei der Einführung neuer Meßgrößen durch Hardwaremaßnahmen angepaßt werden.

Die Neuartigkeit der Erfindung besteht in der Ermittlung der spektralen Verteilung der Neutronenstrahlung (u. U. in großen Energieintervallen), da alle Dosismeßgrößen aus der spektralen Verteilung (unter Mitberücksichtigung der Einstrahlwinkel bzg. der exponierten Person) abgeleitet werden können. Eine Modifizierung der Bewertung der Neutronenstrahlung oder eine Neueinführung einer Dosismeßgröße wie sie z. B. gerade durch die neuen ICRU-Meßgrößen stattfindet, kann verhältnismäßig einfach berücksichtigt werden, indem die Dosiskonversionsfaktoren im Auswertealgorithmus entsprechend adaptiert werden. Es ist somit nicht mehr - wie in der Vergangenheit - nötig die gesamte Detektionshardware anzupassen (zu verändern). Es ist auch erstmals möglich Körper- und Organdosen, wie es die Strahlenschutzverordnung vorschlägt, anzuzeigen.

In Stichpunkten können die Eigenschaften und Vorteile der Erfindung folgendermaßen zusammengefaßt werden:

Ermittlung der spektralen Information und der Dosis (z. B. Hₚ(10)).

Verwendung eines Multi-Element-Systems (1) zur Datenaufnahme; ein Element ist hier dadurch definiert, daß sein Ausgangssignal je nach spektraler Zusammensetzung des Neutronenfeldes variiert.

Zur Analyse der Eingangsdaten wird ein künstliches neuronales Netz (2) eingesetzt. Bei dieser Rechenmethode sind keine Vorabinformationen über die Art der Strahlenquelle (Reaktor, Transportbehälter, Quelle etc.) notwendig. Das System kann an veränderte Anforderungen angepaßt werden, indem lediglich die Software (Netzparameter) verändert wird.

Die Dosis bzw. das Dosisspektrum wird durch Faltung mit leicht austauschbaren Dosiskonversionsfunktionen berechnet.

Das System erlaubt eine zeitaufgelöste Meßwerterfassung. Die Meßwerte können auch während der Messung angezeigt werden (Direktanzeige).

Da das System mehrere Elemente zur Datenaufnahme verwendet, ist bei Ausfall eines oder mehrerer Elemente noch immer eine Dosisabschätzung möglich.

Die Erfindung wird im folgenden anhand zweier Ausführungsbeispiele mit Hilfe der Figuren näher erläutert.

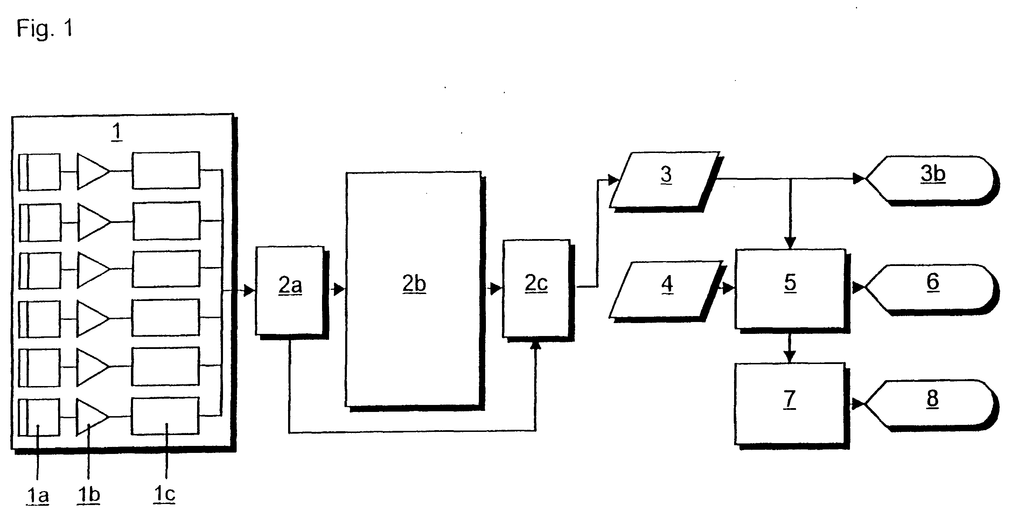

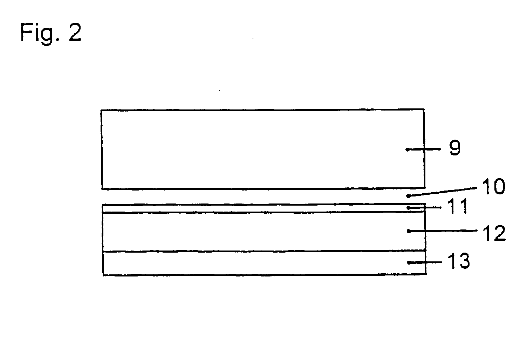

Dabei zeigt die Fig. 1 ein Funktionsschema des Verfahrens und die Fig. 2 einen schematischen Neutronendetektor.

Die Fig. 3 und 4 zeigen jeweils ein Neutronenspektrum mit dazugehörigen Einzelzählraten und dem berechneten Spektrum.

Die Fig. 5 zeigt die Ansprechfunktionen von 6 Neutronendetektoren und die
Fig. 6 zwei Dosiskonversionsfaktor- Kurven.

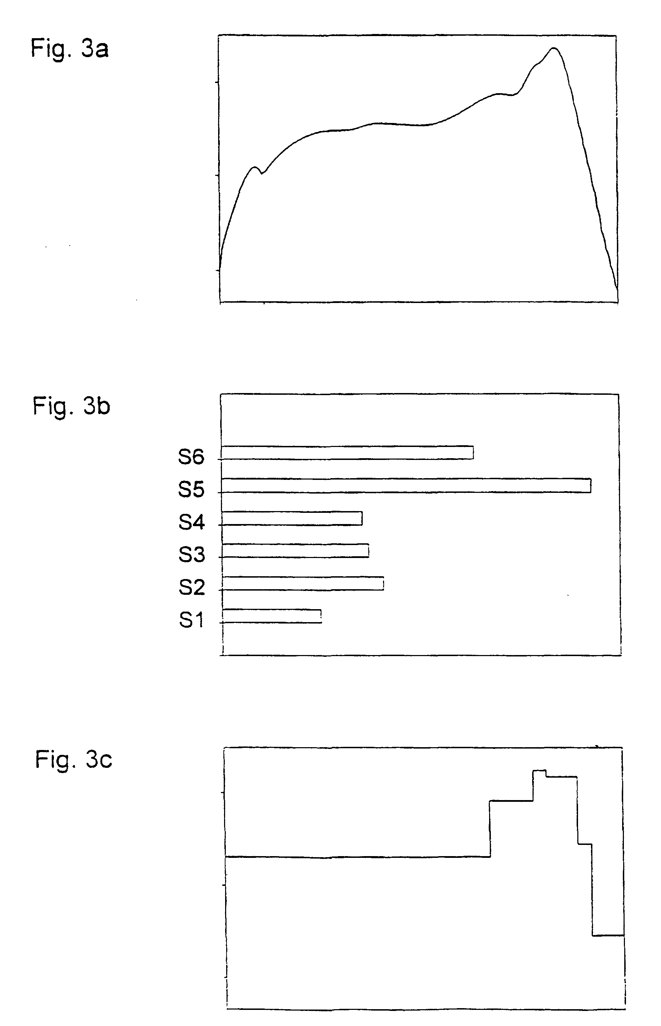

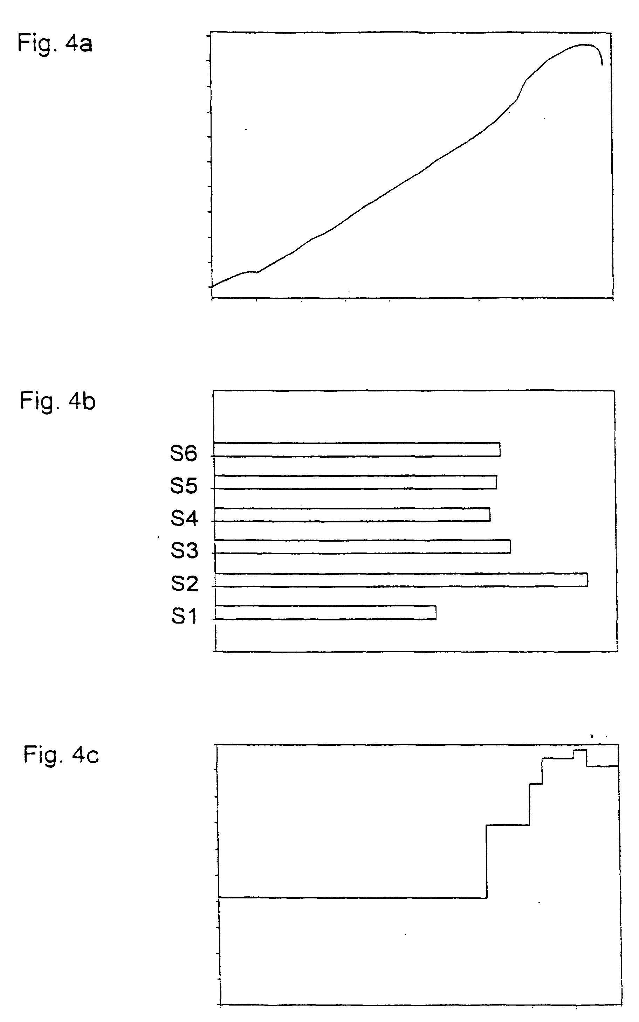

Im Funktionsschema der Fig.1 sind die wesentlichen Funktionsgruppen und Verarbeitungsschritte des Ausführungsbeispiels für ein Dosimetriesystem dargestellt. Die einzelnen Komponenten sind durchnumeriert und werden im folgenden genauer beschrieben. Außerdem wird der Meß- und Analyseprozess beispielhaft anhand zweier stark unterschiedlicher Neutronenspektren in den Fig.3 und 4 illustriert. Dabei werden die zu unterschiedlichen Verarbeitungs zeitpunkten vorliegenden Informationen dargestellt.

### Das Multielement-System 1:

Zur Signalaufnahme dient eine Anordnung mehrerer Elemente, deren Ausgangssignale jeweils abhängig von der spektralen Verteilung des Neutronenfeldes variieren. Mögliche konkrete Ausführungen von Elementen sind zum Beispiel:
- Eine Kombination mehrerer, integrierend betriebener Si-Dioden mit verschiedenem Schichtaufbau und unterschiedlichen Konvertermaterialien zur Umwandlung der Neutronen in geladene Teilchen (besonders geeignet für kleine Dosen). Eine solche Anordnung ist in Fig. 1, 1a, 1b, 1c dargestellt. Ein möglicher Aufbau des Neutronensensors (Fig 1, 1a) ist in Fig. 2 gegeben. Die Signale der Sensoren werden von geeigneten Verstärkern (Fig. 1, 1b) verstärkt und dann gezählt (Fig1 1c).
- Eine Kombination mit einem Verfahren, in dem die verschiedenen Kanäle eines Vielkanalanalysators, der die Pulshöhen-Signale einer einzelnen Konverter-bedeckten Diode augewertet werden (für größere Dosen bei besserer Auflösung geeignet).

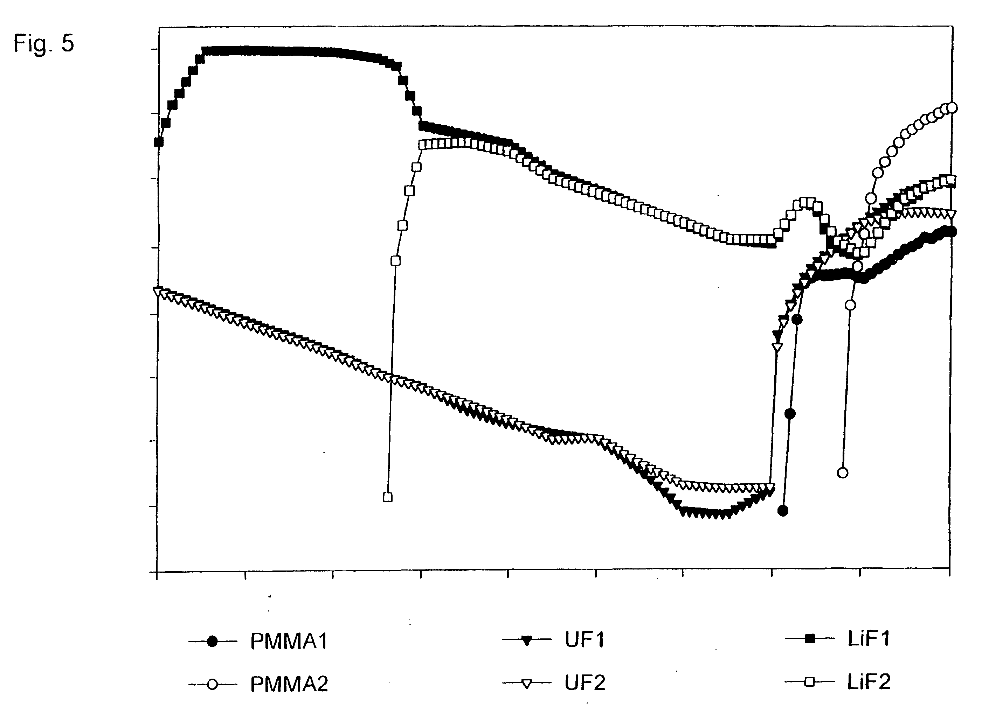

Damit durch das neuronale Netz 2b eine ausreichend gute Rekonstruktion des Spektrums erreicht werden kann, ist es von elementarer Bedeutung eine geeignete Kombination von Singangselementen zu finden (Anzahl der Elemente, Aufbau der Dioden sowie Zusammensetzung und Schichtdicke der Konverter) . Um aus der beliebig großen Zahl möglicher Kombinationen geeignete zu selektieren, wurde erstmalig eine Software zu Simulation der Neutronen-Ansprechfunktionen der einzelnen Dioden entwickelt und durch den Vergleich mit Messungen verifiziert (Fig. 5).

Als Ergebnis dieser Untersuchungen wurde für das hier vorgestellte Anwendungsbeispiel die folgende Anordnung von 6 Si-Dioden in Kombination mit den angegebenen Konvertermaterialien und Schichtdicken verwendet, wobei hier die Konverterschicht direkt vor der Diode angebracht ist. Die Parameter sind in der folgenden Tabelle zusammengestellt.

**Tab. 1:**

| Für das Ausführungsbeispiel verwendete Konvertermaterialien und deren Schichtdicken sowie Totschichtdicke und Dicke der aktiven Schicht der Si-Dioden. | | | | |
|---|---|---|---|---|
| Sensor # | Konverter | Konv.-Dicke | Totschicht (Si) | Aktive Schicht (Si) |
| S1 | PMMA I | 50 µm | 500 Å | 10 µm |
| S2 | PMMA II | 50 µm | 10 µm | 500 µm |
| S3 | UF I | 50 µm | 500 A | 50 µm |
| S4 | UF II | 50 µm | 500 A | 10 µm |
| S5 | ⁶LiF I | 50 µm | 500 A | 50 µm |
| S6 | ⁶LiF II | 2 mm | 500 A | 50 µm |
| ⁶LiF: 6-Lithium-Fluorid (z. B. Harshaw-Bicron TLD-600) UF: Harnstofformaldehyd PMMA: Polymethylmethacrylat | | | | |

### Das künstliche neuronale Netz 2a, 2b, 2c:

Die Berechnung einer aus sechs Energieintervallen (Energiegruppen) bestehenden spektralen Information aus den sechs gemessenen Signalen erfolgt mittels eines künstlichen neuronalen Netzes. Es sind folgende drei Rechenschritte notwendig:

### 2a:

Die Skalierung der gemessenen Zählraten, um von den Signalen einen nur von der Dosis abhängigen Faktor zu separieren. Bei der Skalierung werden alle Zählraten durch die vom Betrag größte Zählrate geteilt, d. h. alle Zählraten liegen nach der Skalierung in einem Wertebereich zwischen Null und Eins. Der separierte Faktor wird für die Rückskalierung (Fig. 1, 2c) gespeichert.

### 2b:

Die Analyse des Signals erfolgt mit einem geeigneten künstlichen neuronalen Netz. Das hier verwendete neuronale Netzwerk ist ein sogenanntes Feed-Forward-Netz mit zwei verdeckten Schichten. Alle Neuronen des Netzes besitzen eine nicht lineare Übertragungsfunktion (hyperbolischer Tangens). Der Ausgabebereich dieser Neuronen liegt zwischen -1.0 und +1.0. Alle Schichten sind mit der jeweils Vorherigen und Nächsten vollständig vernetzt. Es gibt keine Verbindungen über die Schichten hinweg. Für die Eingabeschicht wurden 6 Eingabeknoten entsprechend den Eingangselementen gewählt, für die erste verdeckte Schicht 16 Neuronen, für die zweite verdeckte Schicht 10 Neuronen und für die Ausgabeschicht 6 Neuronen. Die Neuronen der Ausgabeschicht korrespondieren mit der gleichen Anzahl von Energieintervallen des rekonstruierten Spektrums. Die Grenzen der Energieintervalle wurden mit Hilfe eines linearen

χ²-Optimierungsverfahrens unter der Vorgabe ermittelt, die Abweichung der aus dem Originalspektrum ermittelten Dosis zu der aus dem genäherten Spektrum ermittelten Dosis zu minimieren. Anschließend werden die Gewichte (Verbindungsstärken) des Netzwerkes mittels der beiden Lernalgorithmen "Simulated Annealing" und "Backpropagation" trainiert. Die für das Training und den Test des Netzes erforderlichen nominellen Ausgangssignale können durch Messungen und durch Simulation der Sensoren ermittelt werden, wobei abhängig von der Art der verwendeten Spektren (in diesem Fall 392 Stück) die Netztopologie deutlich variieren kann. Nach dem Training bleibt das Netzwerk unverändert und kann für die Berechnung unbekannter Spektren verwendet werden, ohne daß dazu eine große Rechenleistung notwendig ist.

### 2c:

Die Reskalierung fügt, mittels Multiplikation aller 6 Ausgabekanäle mit dem bei der Skalierung gespeicherten Faktor, die absolute Dosis-Information wieder hinzu.

Das zur Analyse der Meßdaten eingesetzte künstliche neuronale Netz (KNN) kann entweder als Software in Verbindung mit einem Mikrocontroller oder als Hardwarelösung z. B. mit einem geeigneten ASIC Baustein realisiert werden. Für das KNN muß eine der Aufgabe angepaßte Netztopologie, ein passendes Reproduktionsverfahren sowie geeignete Trainingsmethoden gewählt werden. Die Netztopologie beschreibt die Anzahl der Neuronen im Netz, deren Anordnung und Übertragungsverhalten sowie die Eigenschaften der Verbindungen unter den einzelnen Neuronen. Das Reproduktionsverfahren, beschreibt die Folge der operativen Rechenschritte vom Anlegen der Eingangswerte bis zum Vorliegen der berechneten Ergebnisse.

Die Verwendung eines geeigneten Trainingsverfahrens oder eine Kombination von mehreren Verfahren hat einen signifikanten Einfluß auf die Qualität der Generalisierungsfähigkeit bei der Reproduktion des fertig trainierten Netzes. Ein Übertrainieren des Netzes, d. h. das Auswendiglernen der Trainingsmuster, kann durch die Verwendung einer Validierungsmenge reduziert werden. Das KNN wird mit Hilfe von bekannten Neutronenspektren trainiert, die zufällig in eine Trainingsmenge (ca. 80 %) und eine Validierungsmenge (ca. 20 %) aufgespalten werden. Das Optimierungsverfahren verwendet nur die Trainingsmenge zur Minimierung des Netzfehlers und benutzt die Validierungsmenge nur zur Bestimmung eines geeigneten Zeitpunktes zum Abbruch des Minimierungsprozesses. Der Lernerfolg wird mittels des Fehlers der Validierungsmenge überwacht, indem die statistische Abweichung der vom KNN aus den Zählraten der Eingangselemente bestimmten Spektren zu den realen Spektren betrachtet wird. Erreicht der Validierungsfehler ein Minimum so ist das Netz optimal trainiert. Beim Training werden dem KNN die Zählraten der Eingangselemente zusammen mit den zugehörigen Neutronenspektren präsentiert. Während diverser Optimierungsdurchläufe erlernt das KNN die Zuordnung von 'Zählraten der Eingangselemente' auf eine 'Näherung des Neutronenspektrums'. Diese Relation ist in den unterschiedlichen Gewichten der Verbindungen zwischen den Neuronen gespeichert. Um die Generalisierungsfähigkeit des KNN zu verbessern, werden dem Netz beim Training zusätzlich unterschiedlich stark verrauschte Versionen der Spektren der Lernmenge präsentiert. Durch eine entsprechende Zusammenstellung der Lernmenge kann das KNN für verschiedene Aufgabenstellungen optimiert werden: So kann das Netz wahlweise z. B. für eine universelle Verwendung wie die Bestimmung der spektralen Information unbekannter Strahlungsfelder über einen möglichst großen Energiebereich trainiert werden oder aber für ein spezialisiertere Aufgabe wie z. B. die möglichst exakte Bestimmung der spektralen Information bei einer vorgegebenen Bestrahlungssituaticn und/oder eingeschränktem Energiebereich.

Für die Anwendung des Netzes müssen die Gewichte nach dem Training nicht mehr verändert werden. Die Gewichte der Netzverbindungen, die das Ergebnis des Lernprozesses beinhalten, werden in einem wiederbeschreibbaren Speicher abgelegt (z. B. EEPROM), und können somit bei Bedarf ausgetauscht und der Situation angepaßt werden. Als Antwort auf die an die Neuronen der Eingangsschicht anliegenden integralen Zählraten der Eingangselemente nehmen die Ausgangsneuronen des trainierten Netzes bei der Reproduktion einen Zahlenwert an, der zu der Anzahl von Neutronen in einem bestimmten Energieintervall proportional ist. Da vom KNN in Abhängigkeit von der Übertragungsfunktion, die für die Neuronen gewählt wurde, nur Eingangs- und Ausgangswerte ein einem bestimmten Intervall verarbeiten werden können sei an dieser Stelle darauf hingewiesen, daß die als Eingangssignal dienenden integralen Zählraten vor der Weitergabe an das KNN passend skaliert, und die Ausgangswerte entsprechend rückskaliert werden müssen.

### Spektrale Information 3:

Als Ergebnis der Analyse der Eingangsdaten durch das künstliche neuronale Netz liegt die spektrale Information in dem Ausführungsbeispiel in Form von 6 Werten für die Neutronenfluenz für die 6 Energieintervalle (Energiegruppen) vor. Diese kann dann zum Einen direkt angezeigt werden (Fig. 1, 3b) und kann sofortige Rückschlüsse über das Strahiungsfeld zulassen, zum Anderen werden diese Daten in einem weiteren Verarbeitungsschritt weitervetarbeitet (Fig. 1, 5).

### Dosis-Konversionsfaktor 4:

Die Energiedosis und die biologische Wirksamkeit von Neutronen unterschiedlicher Energie variiert über den Energiebereich von thermisch bis zu schnellen Neutronen sehr stark. Um dieser Tatsache Rechnung zu tragen, werden Gewichtungsfunktionen (Dosis-Konversionsfaktor-Kurven) verwendet, die je nach gefragter Dosisgröße (H*(10), Hₚ(10), MADE, etc.), Geschlecht (Adam, Eva) bzw. bestimmten Organdosen einen unterschiedlichen Verlauf aufweisen (Fig. 4). Zum anderen sind die Dosis-Konversionsfaktoren, bedingt durch den sich ständig ändernden Stand der Erkenntnisse (z. B. Bewertung der biologischen Wirksamkeit), einem steten Wandel unterworfen. In diesem System werden sie per Software implementiert (Fig. 1, 4), was einen einfachen und kostengünstigen Austausch ermöglicht, ohne daß Änderungen an der Hardware notwendig wären.

### Faltung der spektralen Information mit den Dosis-Konversionsfaktoren 5:

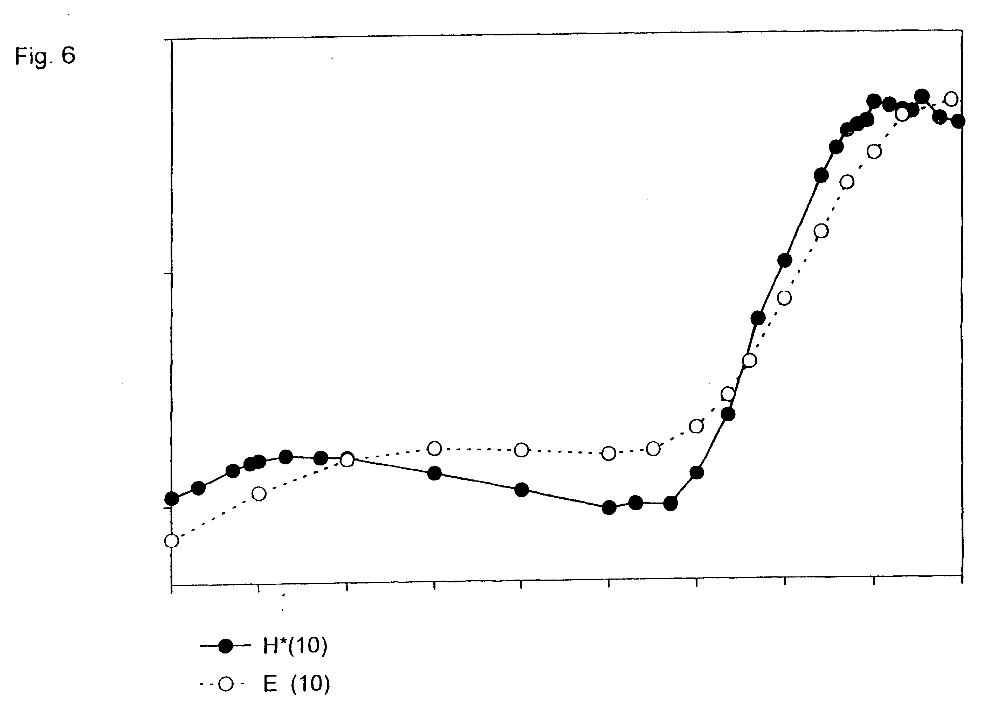

An dieser Stelle wird der unter Absatz 4 beschrieben Sachverhalt dadurch berücksichtigt, daß die vorhandene spektrale Information (Fig. 1, 3) mit der gewünschten Dosis-Konversionsfaktor-Kurve (Fig. 1, 4) gefaltet wird. Das Ergebnis ist ein Dosisspektrum (Fig. 1, 6).

### Das Dosisspektrum 6:

In dem Dosisspektrum (Fig. 1, 6) ist für jeden der 6 Energiebereiche (Energiegruppen) der jeweilige Beitrag zur Gesamtdosis in Form eines (Teil-) Dosiswertes gegeben. Diese Information kann ebenfalls zur Anzeige gebracht werden und kann dadurch z.B. bei der Auswahl geeigneter Abschirmungsmaßnahmen hilfreich sein.

### Integration über das Dosisspektrum 7:

Durch eine abschließende Integration (Fig. 1, 7) über das Dosisspektrum wird dann eine geeignete Dosismeßgröße (H*(10), Hₚ(10), MADE, etc.) bestimmt und direkt angezeigt (Fig. 1, 8).

### Dosiswert 8:

Am Ende der Analysekette liegt ein Dosiswert (Fig. 1, 8) 'vor, der wie bei bisherigen Dosimetern weiterverwendet werden kann. Wie bereits in Absatz 4 erwähnt, kann die zu ermittelnde Dosismeßgröße durch den Austausch der Dosis-Konversionsfaktoren an veränderte Bedürfnisse angepaßt werden. Andererseits erlauben mehrere im System gespeicherte Dosis-Konversionsfaktoren die unmittelbare Abfrage verschiedener Dosismeßgrößen.

### Alternatives Anwendungsbeispiel unter Verwendung von 4 Elementen:

Eine möglichst große Zahl von Elementen mit möglichst unterschiedlichem Verlauf der Neutronen-Ansprechfunktionen erleichtert eine eindeutige Bestimmung der Neutronenspektren durch das künstliche neuronale Netz. Andererseits soll u. a. aus Gründen der Kostenersparnis sowie des niedrig zu haltenden Stromverbrauchs die Zahl der Eingangselemente möglichst klein gehalten werden. Aus diesem Grund wurde - neben dem ausführlich diskutierten Anwendungsbeispiel mit 6 Sensoren - auch die Realisierbarkeit eines Systems mit 4 Sensoren überprüft. Dabei konnte mit einem System, bestehend aus konverterbedeckten Si-Dioden, eine akzeptable Annäherung an das reale Eingangsspektrum erzielt werden. Die Parameter sind in der Tabelle 2 zusammengestellt.

**Tab. 2.**

| Sensor # | Konverter | Konv.-Dicke | Totschicht (Si) | Aktive Schicht (Si) |
|---|---|---|---|---|
| S1 | PMMA I | 1 µm | 500 Å | 10 µm |
| S2 | PMMA II | 1 mm | 10 µm | 500 µm |
| S3 | UF | 20 µm | 500 Å | 10 µm |
| S4 | ⁶LiF | 50 µm | 500 Å | 50 um |

Da jedoch der Zeitaufwand, der in die Optimierung der Sensoren gesteckt werden muß, mit abnehmender Zahl der Eingangsdaten sehr stark ansteigt, wurden in diesem Stadium weitere Untersuchungen zurückgestellt. Es läßt sich jedoch festhalten, daß - speziell, aber nicht notwendigerweise - bei Beschränkung auf bestimmte Neutronen-Energiebereiche und/oder Spektrenklassen eine Herabsetzung der Sensorenzahl auf bis zu 3 Sensoren realistisch erscheint. Selbst ein 2-Sensor-System kann noch Informationen über die Beiträge thermischer und schneller Neutronen liefern.

Die Aufteilung des Pulshöhenspektrums in Energie-Teilbereiche liefert Zusatzinformationen für das künstliche neuronale Netz. Hierbei kann z.B. ausgenutzt werden, daß kinematische Effekte bei der Wechselwirkung von schnellen Neutronen mit den Detektormaterialien zu signifikanten Veränderungen in der Pulshöhenverteilung führen oder aber daß bei exothermen Reaktionen mit thermischen Neutronen eine definierte Maximalenergie der Reaktionsprodukte gegeben ist. Beispiele sind:
- für wasserstoffhaltige Konverter kann - unter der Voraussetzung einer vollständigen Abbremsung in der aktiven Schicht - ausgenutzt werden, daß die maximale Energiedeponierung in der aktiven Schicht direkt proportional zur maximalen Energie der Neutronen ist. Bei Setzen von geeigneten Schwellen kann für das KNN mehr Informationen über schnelle Neutronen mit Energien unter bzw. über den jeweiligen Schwellen gewonnen werden.
- das Setzen einer Energieschwelle bei 2.7 MeV bei einem mit 6-LiF bedecktem Sensor. Dort tragen dann oberhalb der Schwelle nur noch schnelle Neutronen zur Zählrate bei, wogegen unterhalb dieser Schwelle sowohl thermische als auch schnelle Neutronen detektiert werden. Bedingt durch den höheren Wirkungsquerschnitt für die Reaktion mit thermischen Neutronen dominieren hier dann die thermischen Neutronen die Zählrate.

### Beschreibung zu Fig.2:

### Detektionsprinzip

Der Nachweis der Neutronen erfolgt über die Wechselwirkung der einfallenden Neutronen mit den Kernen der Detektorschichten wobei geladene Teilchen erzeugt werden, die über Energiedeponierungen in der aktiven Schicht des Detektors ein Signal erzeugen. Der Aufbau des Detektors kann durch vier Schichten charakterisiert werden:

### Konverterschicht 9:

Hier soll bevorzugt die Wechselwirkung der einfallenden Neutronen stattfinden. Sie bestimmt durch eine entsprechende Auswahl der Materialien und der Schichtdicken die Eigenschaften des Detektors. Wichtig in diesem Zusammenhang ist die Nachweiswahrscheinlichkeit der Neutronen als Funktion ihrer Einstrahlenergie. Schichtdicken: ab 10µ für exotherm wirkende Konverter zum Nachweis von langsamen und thermischen Neutronen bis einige mm für den Nachweis von schnellen Neutronen. Eine detaillierte Betrachtung der für verschiedene Energiebereiche in Frage kommenden Konvertermaterialien ist unter der Überschrift 'Wahl geeigneter Konvertermaterialien' gegeben.

### Totschicht 10, 11:

Aufgrund der Empfindlichkeit von Dioden gegenüber Oberflächenverschmutzungen und Licht werden sie mit einer Passivierungsschicht (Fig. 2, 11) belegt, um die genannten Effekte zu reduzieren. Dies hat den Nebeneffekt, daß die Ionen, die vom Konverter in den Detektor hinein wandern, in dieser Schicht abgebremst werden können. Die Funktion der Nachweiswahrscheinlichkeit kann somit beeinflußt werden. Dicke der Totschicht: idealerweise zum Nachweis von niederenergetischen Teilchen möglichst klein, pratikabel ab 500 Angström bis einige 10 µ für die Anwendung als Schwellenwertsensor. Die oft unvermeidbare Lücke zwischen Konverter und Diode (Fig. 2, 10) wird hier der Totschicht zugerechnet.

### Aktive Schicht 12:

Sie dient zum Nachweis von geladenen Teilchen, die durch die Neutronenwechselwirkung erzeugt wurden. Unter der Vorraussetzung, daß Neutronen- und Photonenereignisse separiert werden können (z. B. durch Pulsformanalyse, Koinzidenztechniken oder ΔE/E-Techniken, kann die aktive Schicht im Vergleich zum Konverter ähnliche Schichtdicken (mehrere 100 µm bis mm) annehmen, so daß die Wechselwirkungen, welche die Neutronen in der aktiven Schicht erfahren, signifikant zur Nachweiswahrscheinlichkeit beitragen. Schichtdicke: Im allgemeinen wählt man hier aktive Schichten geringer Dicke, um die Empfindlichkeit gegenüber Photonen klein zu halten, typischerweise um die 50 µ.

### Passive Schicht hinter der aktiven Zone 13:

Diese bewirkt eine eventuelle Rückstreuung der Ionen. Im Fall eines Detektors, welcher an einem Phantom angebracht ist, kann die rückgestreute Neutronenstrahlung in dieser Schicht wechselwirken wodurch diese Schicht dann als Neutronenkonverter dient.

### Möglichkeiten zum Beeinflussen der Ansprechfunktionen:

Durch Variation der Parameter dieser Schichten können die Ansprechfunktionen (Fig. 5) der Sensoren einen stark unterschiedlichen Verlauf annehmen. Dadurch läßt sich die Anforderung erfüllen, daß die Sensoren erstens im gesamten Energiebereich des Neutronenspektrums messen können müssen und zweitens unterschiedliche Ansprechfunktionen mit in bestimmten Energiebereichen erhöhten Nachweiswahrscheinlichkeiten aufweisen. Der durch Optimierung festgelegte Verlauf der Ansprechfunktionen bestimmt die Realisierbarkeit bzw. Qualität der Entfaltung durch das künstliche neuronale Netz. Die Optimierung wurde den folgenden 2 Prinzipien folgend durchgeführt:

### 1. Prinzip des Schwellenwertsensors:

Dieser Sensortyp ist derart aufgebaut, daß Neutronen ab einer bestimmten Energie detektiert werden. Realisiert werden kann dies durch folgende Methoden:
a) Es werden bei der gemessenen Pulshöhenverteilung Ereignisse ausgewertet, die Energiedeponierungen erst ab einem bestimmten Wert entsprechen.
b) Die Totschicht zwischen dem Neutronenkonverter und der aktiven Zone wird in der Schichtdicke so angepaßt, daß Ionen erst ab einer bestimmten Energie beim Verlassen des Konverters eine nichtverschwindende Wahrscheinlichkeit haben, die aktive Detektorschicht zu erreichen.
c) Der Konverter wird so angepaßt, daß Moderations- und Absorptionseffekte stattfinden.
d) Die Kombination der Methoden a, b und c.

### 2. Prinzip der Komplementärsensoren (Betrachtung von jeweils 2 Sensoren):

Bei diesen Sensortypen wird folgende Idee verfolgt: Zwei Sensoren sind in ihrem Aufbau bis auf eine Schicht gleich (z. B. aktive Schicht). Im Falle der Sensoren, die geeignet sind langsame und thermische Neutronen nachzuweisen, verlaufen die Nachweiswahrscheinlichkeitskurven über viele Größenordnungen der Energie der Neutronen gleich und haben erst im Bereich der schnellen Neutronen andere Werte (z.B. UF1, UF2). Ein derartiges Sensorpaar gibt in diesem Beispiel Informationen über den spektralen Anteil schneller Neutronen. Sensoren zum Nachweis langsamer und thermischer Neutronen, die unterschiedliche Konverterschichtdicken haben, so daß bei einem Sensor Absorptionseffekte bei thermischen Neutronen eintreten, wobei beide Sensoren ähnliche Nachweiswahrscheinlichkeiten für schnelle Neutronen haben, liefern Informationen über spektrale Verteilungen im thermischen Bereich (z. B. LiF1, LiF2).

### Wahl geeigneter Konvertermaterialien

Der Konverter hat die Aufgabe, aus den ungeladenen Neutronen, die nur sehr schwach mit Materie wechselwirken, geladene, gut detektierbare Teilchen erzeugen. Dies kann entweder durch einen elastischen Stoß oder durch Kernreaktionen geschehen. Dabei ist es wichtig, daß der Wirkungsquerschnitt für die jeweilige Reaktion im relevanten Energiebereich groß ist, damit ein effizienter Nachweis der Neutronen erfolgt. Zum anderen muß beachtet werden, daß die erzeugten geladenen Teilchen (Ionen) eine ausreichend hohe Energie haben, um ein Signal, das über dem Grundrauschen der Detektoren liegt, zu liefern. Für die verschiedenen Energiebereiche der einfallenden Neutronen bieten sich unterschiedliche Konverter an:
- Neutronen mit geringer und mittlerer Energie (thermische und intermediäre Neutronen):
   Energiebereich: meV-keV
   Nachweis über exotherme Kernreaktionen (Bsp.: ⁶Li (n,T) ⁴He, ¹⁰B (n,α) ⁷Li, ¹⁴N (n, p) ¹⁴C)
   Beispiele: ⁶Li⁶: LiF-Kristall; ¹⁰B: ¹⁰B-Folie; ¹⁴N: Luftschicht, Nylon
- Neutronen hoher Energie (schnelle Neutronen):
   Energiebereich: > 1 MeV
   Nachweis über eleastischen Stoß mit gebundenen Protonen stark wasserstoffhaltiger Verbindungen (n,p). Obwohl auch Stöße mit anderen Elementen vorkommen, ist der Stoß mit Protonen von herausragender Bedeutung, da aufgrund der (fast) gleichen Massen der Stoßpartner der Energieübertrag auf das geladene Teilchen maximal ist. Außerdem ist die Wahrscheinlichkeit, daß schwerere Stoßpartner den aktiven Bereich des Detektors erreichen, wegen ihres wesentlich größeren Abbremsvermögens bzw. der daraus resultierenden geringen Reichweite gegenüber Protonen stark herabgesetzt.
   Beispiele: PMMA, Paraffin und andere Kunststoffe mit hoher Wasserstoffdichte
- Neutronen hoher Energie (schnelle Neutronen):
   Energiebereich: >7 MeV
   Nachweis über elastischen Stoß und Kernreaktionen, vor allem mit dem Si der Dioden selbst (Bsp.: Si(n,α) ab ca. 2.65 MeV, Si(n,p) ab ca. 3.8 MeV, Si(n,n' α) ab ca. 10 MeV, Si(n,n' p) ab ca. 12 MeV).

Bei Neutronenenergien oberhalb von ca. 7 MeV gewinnen Kernreaktionen aufgrund Ihres in diesem Energiebereich stark ansteigenden Wirkungsquerschnittes an Bedeutung.

### Beschreibung zu Fig. 3 und 4

a) Darstellung des einfallenden Neutronenspektrums. Abszisse: Energie in eV, Bereich: 10 meV bis 10 MeV; Ordinate: Neutronenfluenz·Energie in beliebigen Einheiten. Aufgetragen ist die Größe Neutronenfluenz·Energie im Energiebereich von 10 meV bis 10 MeV. Fig.3 zeigt ein Reaktor-Spaltspektrum mit einem großen Anteil thermischer Neutronen (Abschirmung), Fig.4 dagegen ein Spektrum, das von schnellen Neutronen dominiert wird (keine Abschirmung).
b) Absolute Zählwerte der 6 Elemente. Abszisse: integrale Zählrate in beliebigen Einheiten; Ordinate: Nummer des Elements. Die Numerierung der Elemente (S1-S6) entspricht der in Tab. 1, die Anzahl der registrierten Ereignisse ist jeweils auf einer logarithmischen Skala horizontal aufgetragen. Für die Weiterverarbeitung durch das künstliche neuronale Netz werden die Zählwerte der 6 Elemente auf einer logarithmischen Skala auf den Wertebereich von 0 bis 1 normiert, wobei der entsprechende Normierungsfaktor gespeichert wird.
c) Histogramm-Spektrum. Abszisse: Energie in eV, Bereich: 10 meV bis 10 MeV; Ordinate: Neutronenfluenz·Energie in beliebigen Einheiten. Die Ausgangswerte der 6 Ausgangsneuronen des künstlichen neuronalen Netzes schwanken zwischen -1 und 1. Durch Reskalierung mit dem gespeicherten Normierungsfaktor wird daraus das Histogramm-Spektrum bestimmt.

### Beschreibung zu Fig. 5

Ansprechfunktionen der 6 Sensoren. Abszisse: Energie in eV, Bereich: 10 meV bis 10 MeV; Ordinate: Ansprechwahrscheinlichkeit in beliebigen Einheiten.
Darstellung der Ansprechfunktionen der 6 im Ausführungsbeispiel angegebenen Sensoren. Die Sensoren PMMA1 und PMMA2 veranschaulichen das Schwellenwertsensorprinzip, die LiF1 und LiF2 bzw, UF1 bzw. UF2 Sensoren dagegen das Komplementärsensorenprinzip.

### Beschreibung zu Fig. 6

Beispiele für Dosiskonversionsfaktor-Kurven. Abszisse: Energie in eV, Bereich: 10 meV bis 10 MeV; Ordinate: Konversionsfaktor in pSv·cm² Bereich (Skalenstriche): 10 bis 1000.
Vergleich der Dosiskonversionsfaktor-Kurven für zwei unterschiedliche Dosismeßgrößen (H*(10), E(10)). Besonders in dem Bereich mit einer starker Änderung des Konversionsfaktors ist eine gute Reproduktion des Neutronenspektrums durch das künstliche neuronale Netz wichtig.

## Patentansprüche

1. Verfahren zur Ermittlung von Neutronenspektren, bei dem das Neutronenspektrum mit Hilfe von mindestens 2 Neutronendetektoren mit unterschiedlichen Ansprechfunktionen ermittelt wird, wobei von den integralen Zählraten dieser Neutronendetektoren auf das Spektrum zurückgeschlossen wird, wobei das Neutronenspektrum aus den integralen Zählraten der beiden Neutronendetektoren mit Hilfe eines künstlichen neuronalen Netzes geeigneter Topologie, das für diese Aufgabenstellung trainiert wurde, ermittelt wird, **dadurch gekennzeichnet, daß** als Neutronendetektoren Halbleiterdetektoren, bestehend aus Halbleiterdiode und Konverter, verwendet werden, wobei die Ansprechfunktionen durch die Wahl des Konvertermaterials, der Dicke der Konverterschicht und durch die Dicken von Totschicht und aktiver Schicht der Halbleiterdetektoren eingestellt werden, sodaß sie einen stark unterschiedlichen Verlauf nehmen.

2. Verfahren nach Anspruch 1, **dadurch gekennzeichnet, daß** die integrale Intensität des Neutronenspektrums mit Hilfe von mindestens 2 weiteren Neutronendetektoren erfaßt wird, wobei sich die Ansprechfunktionen aller Neutronendetektoren voneinander unterscheiden.

3. Verfahren nach Anspruch 2, **dadurch gekennzeichnet daß** die integrale Intensität des Neutronenspektrums mit Hilfe von mindestens 2 weiteren Neutronendetektoren erfaßt wird, wobei sich die Ansprechfunktionen aller Neutronendetektoren voneinander unterscheiden.

4. Verfahren nacheinem der Ansprüche 1 bis 3, **dadurch gekennzeichnet daß** als Halbleiterdioden Siliziumdioden verwendet werden.

5. Verfahren nach einem der Ansprüche 1 bis 4, **dadurch gekennzeichnet, daß** die Ansprechfunktion von mindestens einem der Neutronendetektoren in verschiedene Energiebereiche unterteilt wird, wobei die integralen Zählraten in diesen Energiebereichen dem künstlichen neuronalen Netz als Eingangsdaten zur Bestimmung des Neutronenspektrums zur Verfügung gestellt werden.

6. Verfahren nach einem der Ansprüche 1 bis 5, **dadurch gekennzeichnet, daß** aus dem Neutronenspektrum ein Dosisspektrum und/oder die Neutronendosis bestimmt wird.

7. Vorrichtung zur Durchführung des Verfahrens gemäß einem der Ansprüche 2 bis 6, **gekennzeichnet durch**:
a) mindestens 3 Halbleiterdetektoren als Neutronendetektoren mit unterschiedlichen Ansprechfunktionen, wobei die Ansprechfunktionen **durch** die Wahl des Konvertermaterials, der Dicke der Konverterschicht und **durch** die Dicken von Totschicht und aktiver Schicht der Halbleiterdiode eingestellt sind, mit Spannungsversorgung und Auswerteelektronik und ein
b) künstliches neuronales Netz das als Eingangsdaten die integralen Zählraten der Halbleiterdetektoren benutzt und dessen Ausgänge verschiedenen Energiebereichen des Neutronenspektrums entsprechen wobei das künstliche neuronale Netz für diese Aufgabe trainiert ist.

8. Vorrichtung nach Anspruch 7, **dadurch gekennzeichnet, daß** die Ansprechfunktionen von mindestens 2 Neutronendetektoren die hochenergetischen oder die niederenergetischen Neutronen bevorzugen.

9. Vorrichtung nach Anspruch 7 oder 8, **dadurch gekennzeichnet, daß** die Halbleiterdetektoren als "Sandwich" angeordnet sind.

10. Verwendung der Vorrichtung nach einem der Ansprüche 7 bis 9 für die Personendosimetrie oder die Ortsdosimetrie.

## Claims

1. Method for detecting neutron spectra, in which the neutron spectrum is detected by means of at least 2 neutron detectors with different response functions, the spectrum being inferred from the integral counter rates of these neutron detectors, the neutron spectrum being detected from the integral counter rates of both neutron detectors by means of an artificial neuronal network of suitable topology, which has been trained for this task, **characterised in that** semiconductor detectors, which comprise semiconductor diode and converter, are used as neutron detectors, the response functions being adjusted by the choice of the converter material, of the thickness of the converter layer and by the thicknesses of dead layer and active layer of the semiconductor detectors, so that they take a greatly different course.

2. Method according to claim 1, **characterised in that** the integral intensity of the neutron spectrum is detected by means of at least 2 further neutron detectors, the response functions of all neutron detectors differing from each other.

3. Method according to claim 2, **characterised in that** the integral intensity of the neutron spectrum is detected by means of at least 2 further neutron detectors, the response functions of all neutron detectors differing from each other.

4. Method according to one of the claims 1 to 3, **characterised in that** silicon diodes are used as semiconductor diodes.

5. Method according to one of the claims 1 to 4, **characterised in that** the response functions of at least one of the neutron detectors is subdivided into different energy regions, the integral counter rates in these energy regions being made available to the artificial neuronal network as input data for determination of the neutron spectrum.

6. Method according to one of the claims 1 to 5, **characterised in that** a dose spectrum and/or the neutron dose is determined from the neutron spectrum.

7. Device for implementing the method according to one of the claims 2 to 6, **characterised by**:
a) at least 3 semiconductor detectors as neutron detectors with different response functions, the response functions being adjusted by the choice of the converter material, of the thickness of the converter layer and by the thicknesses of dead layer and active layer of the semiconductor diode, with voltage supply and evaluation electronics and an
b) artificial neuronal network which uses the integral counter rates of the semiconductor detectors as input data and the outputs of which semiconductor detectors correspond to different energy regions of the neutron spectrum, the artificial neuronal network being trained for this task.

8. Device according to claim 7, **characterised in that** the response functions of at least 2 neutron detectors prefer the high-energy or the low-energy neutrons.

9. Device according to claim 7 or 8, **characterised in that** the semiconductor detectors are disposed as a "sandwich".

10. Use of the device according to one of the claims 7 to 9 for personal dosimetry or local dosimetry.

## Revendications

1. Procédé pour déterminer des spectres de neutrons, le spectre de neutrons étant déterminé à l'aide d'au moins 2 détecteurs de neutrons présentant des fonctions de réaction différentes, les taux de comptage intégraux de ces détecteurs de neutrons permettant de déduire le spectre, le spectre de neutrons étant déterminé à partir des taux de comptage intégraux des deux détecteurs de neutrons à l'aide d'un réseau neuronal artificiel d'une topologie appropriée, qui a été entraîné pour cette mission,
**caractérisé en ce que**
comme détecteurs de neutrons on utilise des détecteurs à semi-conducteur comprenant une diode de semi-conducteur et un convertisseur, les fonctions de réaction étant réglées par le choix du matériau du convertisseur, l'épaisseur de couche du convertisseur et les épaisseurs de la couche morte et de la couche active des détecteurs à semi-conducteur, de telle sorte qu'elles prennent une allure très différente.

2. Procédé selon la revendication 1,
**caractérisé en ce que**
l'intensité intégrale du spectre de neutrons est détectée à l'aide d'au moins 2 autres détecteurs de neutrons, les fonctions de réaction de tous les détecteurs de neutrons étant différentes les unes des autres.

3. Procédé selon la revendication 2,
**caractérisé en ce que**
l'intensité intégrale du spectre de neutrons est détectée à l'aide d'au moins 2 autres détecteurs de neutrons, les fonctions de réaction de tous les détecteurs de neutrons étant différentes les unes des autres.

4. Procédé selon l'une des revendications 1 à 3,
**caractérisé en ce que**
les diodes à semi-conducteur sont des diodes au silicium.

5. Procédé selon l'une des revendications 1 à 4,
**caractérisé en ce que**
la fonction de réaction d'au moins l'un des détecteurs de neutrons est divisé en différentes zones d'énergie, les taux de comptage intégraux dans ces zones d'énergie étant fournis au réseau neuronal artificiel comme données d'entrée pour déterminer le spectre de neutrons.

6. Procédé selon l'une des revendications 1 à 5,
**caractérisé en ce qu'**
à partir du spectre de neutrons on détermine un spectre de dosage et/ou la dose de neutrons.

7. Dispositif pour la mise en oeuvre du procédé selon l'une des revendications 2 à 6,
**caractérisé par** :
a) au moins 3 détecteurs à semi-conducteur servant de détecteur de neutrons présentant des fonctions de réaction différentes, les fonctions de réaction étant réglées par le choix du matériau du convertisseur, de l'épaisseur de couche du convertisseur et des épaisseurs de la couche morte et de la couche active de la diode à semi-conducteur, avec alimentation en tension et électronique d'interprétation, et
b) un réseau neuronal artificiel utilisant comme données d'entrée les taux de comptage intégraux des détecteurs à semi-conducteur, et dont les sorties correspondent à différentes zones d'énergie du spectre de neutrons, le réseau neuronal artificiel étant entraîné pour cette mission.

8. Dispositif selon la revendication 7,
**caractérisé en ce que**
les fonctions de réaction d'au moins 2 détecteurs de neutrons préfèrent soit les neutrons à haute énergie soit les neutrons à basse énergie.

9. Dispositif selon la revendication 7 ou 8,
**caractérisé en ce que**
les détecteurs à semi-conducteur sont disposés en « sandwich ».

10. Utilisation du dispositif selon l'une des revendications 7 à 9, pour la dosimétrie de personnes ou la dosimétrie de lieux.
